# EUROPÄISCHE PATENTSCHRIFT

(11) **EP 2 897 791 B1**
(45) Veröffentlichungstag und Bekanntmachung des Hinweises auf die Patenterteilung: **11.09.2019**
(21) Anmeldenummer: 13740302.8
(22) Anmeldetag: 25.07.2013
(51) Int. Cl.: B29D 99/00, B29C 33/54, B29C 70/44, B29C 33/38, B29C 45/14, B29L 31/08

(54) **VERFAHREN ZUR HERSTELLUNG VON WINDENERGIEANLAGEN-ROTORBLÄTTERN, SOWIE ZUR HERSTELLUNG EINES FORMKERNS HIERFÜR**
PROCESS FOR PRODUCING WIND POWER PLANT ROTOR BLADES AND FOR PRODUCING A MOULD CORE THEREFOR
PROCÉDÉ DE FABRICATION DE PALES DE ROTOR D'ÉOLIENNE, ET PROCÉDÉ DE FABRICATION D'UN NOYAU DE FORMAGE POUR CELLES-CI

(30) Priorität: 19.09.2012 DE 102012216830
(43) Veröffentlichungstag der Anmeldung: 29.07.2015
(73) Patentinhaber: Wobben Properties GmbH, 26607 Aurich (DE)
(72) Erfinder: KAMKE, Ingo, 26487 Blomberg (DE); SANFTLEBEN, Rico, 26639 Wiesmoor (DE)
(74) Vertreter: Eisenführ Speiser
(86) Internationale Anmeldenummer: PCT/EP2013/065689
(87) Internationale Veröffentlichungsnummer: WO 2014/044445

(56) Entgegenhaltungen:
- EP-A1- 1 310 351
- WO-A1-00/01520
- WO-A1-95/14563
- DE-A1-102006 031 325
- DE-A1-102011 003 378
- US-A- 3 008 859
- US-A1- 2007 057 413

## Beschreibung

Die vorliegende Erfindung betrifft ein Verfahren zur Herstellung eines Formkerns für die einteilige Herstellung von Windenergieanlagen-Rotorblättern.

Windenergieanlagen-Rotorblätter sind im Anlagenbetrieb hochbelastete Bauteile, bei denen es bereits aus diesem Grund auf eine gute strukturelle Integrität ankommt. Hierbei hat sich im Laufe der Jahre gezeigt, dass insbesondere bei Rotorblättern, die aus mehreren Bauteilen zusammengefügt sind, im Bereich der Fügestellen potentielle strukturelle Schwachpunkte erkennbar werden, die einen erhöhten Wartungs- und Instandsetzungsaufwand erfordern können.

Es sind zwar Blattformen und auch Herstellverfahren bekannt, die bereits eine im Allgemeinen zufriedenstellende und zuverlässige Bauweise von Rotorblättern ermöglichen. Nichtsdestotrotz besteht ein Bedarf, die Anzahl notwendiger Fügestellen zu minimieren, um bei Rotorblättern für Windenergieanlagen die Defektrisiken zu vermindern.

Ein bekannter Ansatz ist hierbei die einteilige Herstellung von Windenergieanlagen-Rotorblättern. Hierbei werden ein Formkern und eine Mehrzahl von Formteilen bereitgestellt, wobei die Formteile in zusammengesetzter Form ein Negativabbild des herzustellenden Rotorblatts bilden. Zwischen den Formteilen und dem Formkern ist ein Volumen ausgebildet, welches mit dem für die Struktur wesentlichen Material des Rotorblatts gefüllt wird. Besonders bevorzugt werden hierbei Verbundwerkstoffe verwendet, beispielsweise GFK- oder CFK-Werkstoffe.

Während die äußere Form des Rotorblatts durch die Formteile selbst vorgegeben wird, ist der Formkern dafür verantwortlich, die innere Form des Rotorblatts zu definieren, und gleichzeitig dafür zu sorgen, dass die Werkstoffe, welche in Schichten in das Volumen zwischen den Formteilen und den Formkern angeordnet werden, sich exakt an die durch die Formteile vorgegebene Außenform anschmiegen.

Ein Verfahren zur einteiligen Herstellung eines Windenergieanlagen-Rotorblatts ist beispielsweise aus DE 602 107 29 T2 bekannt. Das dort beschriebene Verfahren beschreibt die Verwendung eines festen Formkerns, der mit einer elastischen Außenschicht umgeben ist. Durch Kompression der elastischen Außenschicht in Verbindung mit dem harten Kern werden beim Zusammensetzen der Formteile die Faserschichten an die Formteile gepresst.

Das bekannte Verfahren hat mehrere Nachteile. Zum einen verlangt es die Ausbildung eines festen Formkerns, dass dieser sehr präzise gefertigt wird. Hiermit ist ein hoher Herstellungsaufwand für den Formkern notwendig. Des Weiteren besteht aufgrund des elastischen äußeren Bereichs des Formkerns die Gefahr, dass beim Zusammenpressen der Formteile Verzug oder Wellenbildung in den Faserwerkstoff-Schichten zwischen Formkern und Formteil auftritt, was die strukturelle Integrität des Rotorblatts insgesamt gefährdet. Ferner ist durch den festen Formkern und den dafür erforderlichen Fertigungsaufwand die Geometrie des Rotorblatts auf verhältnismäßig einfache Geometrieformen beschränkt. Ein Formkern der in DE 602 107 29 T2 beschriebenen Bauart lässt sich für aerodynamisch optimierte Rotorblätter, die gegebenenfalls Verschränkungen und Hinterschneidungen aufweisen, nicht in zufriedenstellender Güte herstellen. Weiterhin sind starre Formkörper nicht oder nur sehr schwer aus solchen Rotorblättern entnehmbar, nachdem die Rotorblätter einteilig verbunden und ausgehärtet sind.

US 3008859 offenbart ein Verfahren zur Herstellung eines Formkerns für die einteilige Herstellung von Windenergieanlagen-Rotorblättern unter Verwendung eines flexiblen Hohlkörpers, der mit Schüttgut befüllt wird.

Vor diesem Hintergrund lag der vorliegenden Erfindung die Aufgabe zugrunde, ein Verfahren der eingangs genannten Art anzugeben, mit dem ein Formkern geschaffen werden kann, der die im Stand der Technik aufgefundenen Nachteile möglichst überwindet.

Die Erfindung löst die ihr zugrunde liegende Aufgabe bei einem Verfahren gemäß dem Anspruch 1.

Die Erfindung macht sich hierbei die Erkenntnis zunutze, dass der Hohlkörper nach dem Aufbringen des Unterdrucks die durch die Formteile vorgegebene Form behält. Hierfür sorgt der auf den mit Unterdruck beaufschlagten Hohlkörper wirkende Umgebungsdruck. Gleichzeitig sorgt die vollständige Befüllung des Hohlkörpers mit Schüttgut dafür, dass der Formkörper beim Anlegen des Unterdrucks wenn überhaupt, sodann nur einen zu vernachlässigenden Volumenverlust erleidet. Dies wird insbesondere dadurch gewährleistet, dass der Hohlkörper vollständig mit Schüttgut befüllt ist, und das Schüttgut selbst druckstabil ist. Bereits beim Befüllen des Hohlkörpers mit Schüttgut verdrängt das Schüttgut einen Großteil der Luft aus dem Hohlkörper, und die noch verbleibende Luft kann aus dem vollständig befüllten Hohlkörper abgesaugt werden, wobei die aneinander liegenden Partikel des Schüttguts die durch die Formteil vorgegebene Form aufrechterhalten. Ein besonderer Vorteil des erfindungsgemäßen Verfahrens zeigt sich auch darin, dass der Hohlkörper im Anschluss an seine Verwendung in einem Verfahren zur Herstellung von Windenergieanlagen-Rotorblättern selbst bei kompliziertesten Rotorbiatt-Geometrien einfach entfernt werden kann. Hierfür ist es lediglich notwendig, den Unterdruck in dem Hohlkörper durch Öffnen des Hohlkörpers abzubauen, diesen so zu belüften und eine Teil-Menge Schüttgut abzulassen, so dass der Hohlkörper aus dem Inneren der Formteile bzw. dem Inneren des Rotorblatts herausgezogen werden kann.

Erfindungsgemäß wird der Hohlkörper vor dem Schritt des Einfügens teilweise mit Schüttgut befüllt, vorzugsweise zu 20% bis 70%.

Dadurch, dass der Hohlkörper bereits vor dem Einfügen bzw. Einlegen des Hohlkörpers zwischen die Formteile teilweise gefüllt ist, lässt er sich besser innerhalb der Formteile positionieren. Gleichzeitig ist er aufgrund der nur teilweisen Befüllung aber noch so beweglich, dass er gut repositioniert und geformt werden kann. Das vollständige Befüllen des Hohlkörpers erfolgt sodann, nachdem dieser zwischen den Formteilen positioniert worden ist.

Gemäß einer bevorzugten Ausführungsform der Erfindung umfasst das Verfahren den Schritt des Erzeugens eines kurzzeitigen Überdrucks in dem mit Schüttgut befüliten, zwischen die Formteile eingefügten Hohlkörper. Unter kurzzeitig wird hierbei ein Zeitraum von 5 Minuten oder weniger verstanden. Abhängig vom Fließverhalten des Schüttguts kann auch ein Zeitraum im zweistelligen Sekundenbereich oder darunter ausreichend sein. Durch diesen Verfahrensschritt wird eine weitere, signifikante Verbesserung der Hohlkörper-Befüllung erreicht. Es hat sich gezeigt, dass bisweilen beim Befüllen des Hohlkörpers zwischen den Formteilen, insbesondere im Bereich von Hinterschneidungen, eine nicht einhundertprozentige Anschmiegung des Hohlkörpers an die durch die Formteile vorgegebene Kontur erfolgt. Durch kurzzeitiges Anlegen eines Überdrucks auf das Innere des Hohlkörpers wird dieser gewissermaßen aufgeblasen, wodurch sich die Bewandung des Hohlkörpers exakt an die umgebenden Formteile anschmiegt, und das bereits in dem Hohlkörper befindliche Schüttgut sich wie in einem Setzvorgang in die nun zusätzlich erzeugten Räume begibt.

Nach dem Schritt des Erzeugens von Überdruck wird das Verfahren vorteilhaft dadurch weitergebildet, dass Schüttgut in den Hohlkörper nachgefüllt wird. Hierdurch wird der durch den Setzvorgang freigewordene Raum des Hohlkörpers wiederum mit Schüttgut aufgefüllt. So wird ein optimales Ausschöpfen des Volumens zwischen den Formteilen ermöglicht.

Gemäß einer weiteren bevorzugten Ausführungsform des erfindungsgemäßen Verfahrens umfasst dies ferner den Schritt: Neigen des vorzugsweise bereits zwischen die Formteile eingefügten Hohlkörpers in eine zur Horizontalen angewinkelte Position, vorzugsweise in einem Bereich von 5° bis 90°. Es hat sich gezeigt, dass ein Neigen der Formteile und des darin befindlichen Hohlkörpers beim Befüllen, und vorzugsweise auch beim Beaufschlagen des Hohlkörpers mit Überdruck, das Nachlaufen und Setzen des Schüttguts vorteilhaft unterstützt. Je stärker die Kohäsionsneigung zwischen den einzelnen Partikeln des Schüttguts ausgebildet ist, und je stärker sich die Partikel des Schüttguts ineinander verhaken, desto größer wird erfindungsgemäß der Neigungswinkel gewählt. Zusätzlich wirkt die Schwerkraft des Schüttguts unterstützend hierbei,

Gemäß einer weiteren bevorzugten Ausführungsform des erfindungsgemäßen Verfahrens umfasst dies ferner den Schritt: Rütteln des Hohlkörpers, vorzugsweise bereits zwischen die Formteile eingefügten, Hohlkörpers in der zur Horizontalen angewinkelten Position. Unter dem Begriff des Rüttelns wird hierbei das ruckartige Bewegen des Hohlkörpers in verschiedene Richtungen derart verstanden, dass Vibrationen bis ins Innere des Hohlkörpers vordringen. Hierdurch wird eine Nachlauf- und Setzbewegung des Schüttguts noch weiter verstärkt und verbessert.

Weiter vorzugsweise wird zum Befüllen des Hohlkörpers ein Einfüllstutzen bereitgestellt und verwendet, welcher derart vertikal von einer Einfüllöffnung des Hohlkörpers beabstandet ist, dass das Schüttgut unter Einwirkung der Schwerkraft in den Hohlkörper hineinbewegt wird. Der Einfüllstutzen ist vorzugsweise höhenbeweglich ausgebildet und wird beim Neigen des Hohlkörpers nachgeführt, so dass der vertikale Abstand auch bei geneigtem Hohlkörper vorhanden ist.

In einer weiteren vorteilhaften Weiterbildung des erfindungsgemäßen Verfahrens ist der Formkern ein mehrteiliger Formkern, wobei jedes dieser Teile hergestellt wird mit den Schritten:
- Einfügen des Hohlkörpers zwischen Formteile, die derart zueinander angeordnet sind, dass sie eine Negativform abbilden,
- Befüllen des Hohlkörpers mit Schüttgut, vor oder nach dem Einfügen des Hohlkörpers zwischen die Formteile, und
- Erzeugen eines Unterdrucks in dem Hohlkörper, nachdem dieser befüllt und eingefügt worden ist, wobei der Hohlkörper in einer der Negativform entsprechenden Positivform erstarrt.

Ab einer bestimmten Größe werden Windenergieanlagen-Rotorblätter vorzugsweise zusätzlich mit innen zwischen den Wandungen des Rotorblatts verlaufenden Stegen versteift. Die Stege werden vorzugsweise als Formteile zusätzlich bei der Herstellung des Formkerns bereits mit zwischen die Formteile eingebettet. Von dem mehrteiligen Formkern erstreckt sich jeweils ein Teil zwischen den die Außenwandung des Rotorblatts abbildenden Formteilen und den Stegen. Jedes der Teile des mehrteiligen Hohlkörpers wird hierbei vorzugsweise gemäß einer der vorstehend beschriebenen bevorzugten Ausführungsformen für den einteiligen Hohlkörper ausgebildet, wobei insbesondere für jedes der Teile
- der jeweilige Hohlkörper vor dem Schritt des Einfügens teilweise mit Schüttgut befüllt wird, vorzugsweise zu 20% bis 70% und nach dem Schritt des Einfügens vollständig mit Schüttgut befüllt wird, und für jedes der Teile einer, mehrere oder sämtliche der Schritte durchgeführt werden:
- Erzeugen eines kurzzeitigen Überdrucks in dem mit Schüttgut befüllten, zwischen die Formteile eingefügten Hohlkörper,
- Nachfüllen von Schüttgut nach dem Schritt des Erzeugens von Überdruck, und/oder
- Neigen des, vorzugsweise bereits zwischen die Formteile eingefügten, Hohlkörpers in eine zur Horizontalen angewinkelte Position, vorzugsweise in einem Bereich von 5° bis 90° und/oder
- Rütteln des Hohlkörpers, vorzugsweise bereits zwischen die Formteile eingefügten, Hohlkörpers in der zur Horizontalen angewinkelten Position.

Vorzugsweise erfolgt für jedes der Teile das Befüllen mittels des überhöhten Einfüllstutzens oder jeweils mittels eines separaten Einfüllstutzens.

Es ist bei dem erfindungsgemäßen Verfahren bevorzugt, dass als Schüttgut ein, vorzugsweise kohäsionsloses, Schüttgut verwendet wird, das insbesondere aus kugelförmigen Partikeln besteht. Unter einem kohäsionslosen Stückgut wird hierbei verstanden, dass das Stückgut ein unbehindertes Fließverhalten aufweist, und einzelne Stückgutpartikel das Fließverhalten nicht durch ein Anhaften an andere Partikel behindern. Haftvorgänge infolge elektrostatischer Aufladung der Partikel, die beispielsweise mitunter durch Reibung während des Fließens verursacht wird, kann hierbei vernachlässigt werden. Die Partikel des Schüttguts sind vorzugsweise kugelförmig oder polyederförmig ausgebildet. Bei kugelförmigen Partikeln und Polyedern mit sechs oder mehr Flächen besteht in der Regel ein besonders gutes Fließverhalten.

Die Partikel des Schüttguts sind bevorzugt als Kunststoffkörper ausgebildet, vorzugsweise aus einem Polymerwerkstoff. Aus der Gruppe der Polymere kommen die meisten Materialien in Frage, vorzugsweise ist das Material ausgewählt aus der Gruppe bestehend aus Polyurethan, Polyethylen, Polypropylen, Polyvinylchlorid, Polyester, (expandiertes) Polystyrol. Besonders bevorzugt ist das Material des Schüttguts aus einem biologisch abbaubaren Polyester ausgebildet. Falls beabsichtigt ist, den mit dem erfindungsgemäßen Verfahren hergestellten Formkern auch während des Aushärtens des Rotorblatts zwischen den Formteilen zu belassen, weist das Material des Schüttguts vorzugsweise eine ausreichende Temperaturbeständigkeit aufweisen. Diese ist insbesondere gegeben, solange die Glasübergangstemperatur größer ist als 80°C, vorzugsweise größer als 150°C. Aufgrund des anliegenden Unterdrucks im Inneren des Hohlkörpers werden die Partikel des Schüttguts allerdings auch dann stabilisiert in Form gehalten, wenn sie den Temperaturen während des Aushärtens nicht standhalten. Die Glasübergangstemperatur wird hierin verstanden als diejenige, die mittels der dynamischen Differenzkalorimetrie (DSC) nach DIN EN ISO 11357 bestimmt worden ist.

Vorzugsweise beträgt der mittlere Durchmesser der Partikel 20 mm oder weniger, besonders bevorzugt 1,5 mm bis 6 mm. Bei diesen kleinen Durchmessern wird ein besonders gutes Anschmiegen an die vorgegebene Kontur erreicht, und gleichzeitig ist die Partikelgröße noch ausreichend, um ein gutes Handling des Schüttguts bei gutem Fließverhalten während des Befüllvorgangs zu bewahren.

Die Erfindung betrifft ferner ein Verfahren zur einteiligen Herstellung eines Windenergieanlagen-Rotorblattes, gemäß dem Anspruch 10.

Das vorstehend genannte Verfahren zur einteiligen Herstellung eines Windenergieanlagen-Rotorblattes macht sich vollumfänglich die Vorteile zunutze, die das Verfahren zur Herstellung des Formkerns eröffnet, weswegen diesbezüglich auf die vorstehenden Ausführungen verwiesen wird. Insbesondere der Vorteil der leichteren Entnehmbarkeit spiegelt sich in dem Verfahren zur einteiligen Herstellung des Windenergieanlagen-Rotorblattes wieder.

Während das vorstehenden beschriebene Verfahren ein Vakuum-Injektionsverfahren darstellt, wird auch festgestellt, dass die Vorzüge des mit dem erfindungsgemäßen Verfahrens zur Herstellung eines Formkerns ihre Wirkung auch bei einem Verfahren entfalten, was anstelle des Zuführens von Injektionswerkstoff zwischen die Formteile und den Formkern die Verwendung von sogenannten Prepregs vorsieht, die in bereits durchtränktem Zustand um den Formkern bzw. in die Formteile gelegt werden, und ausgehärtet werden, ohne dass mittels Unterdruckbeaufschlagung noch injektionswerkstoff zugeführt werden müsste.

Das erfindungsgemäße Verfahren zur Herstellung eines Windenergieanlagen-Rotorblattes wird durch den Schritt weitergebildet:
Belegen des Formkerns oder der Formteile mit einer, mehreren oder sämtlichen der Folgenden:
- einer Transferfolie, vorzugsweise als äußerste Schicht,
- einer Vakuumfolie, vorzugsweise als innerste Schicht,
- einen oder mehreren ersten Fluidleitungen zum Beaufschlagen des Volumens zwischen dem oder den Formkernen und den Formteilen mit Unterdruck,
- einen oder mehreren zweiten Fluidleitungen zur Zufuhr von injektionswerkstoff in das Volumen zwischen dem oder den Formkernen und den Formteilen mit Unterdruck,
- einem oder mehreren Holmgurten,
- einem oder mehreren weiteren, beispielsweise als Steg oder Wuchtkammer ausgebildeten, Formteilen, wobei der oder die Formteile und Holmgurte jeweils mit Injektionswerkstoff durchtränkt sind oder während des Schritts des Zuführens von Injektionswerkstoff zwischen die Formteile und den oder die Formkerne unter Unterdruck durchtränkt werden.

Die Transferfolie dient dazu, die ausgehärtete Struktur leichter von den verwendeten Formteilen trennen zu können. Eine Vakuumfolie als innerste Schicht zwischen Formkern und Faserwerkstoff-Schicht ist insbesondere dann vorzusehen, wenn der Hohlkörper selbst nicht vakuumdicht ist. Dieser muss mit einer Vakuumfolie umlagert werden, damit er nach Unterdruckbeaufschlagung seine Form behalten kann. Optional können zusätzlich zu dem aus druckdichtem Material bestehenden Hohlkörper noch Vakuumfolien vorgesehen werden.

Gemäß einer besonders fertigungsökonomischen Ausgestaltung des Verfahrens wird zunächst wenigstens das erste Formteil belegt, wobei auch beide Formteile gleichzeitig belegt werden können, bevor im Anschluss der oder die Formkerne in das erste Formteil eingesetzt werden. Der oder die Formkerne und das erste Formteil werden nach dem Einsetzen zueinander fixiert, beispielsweise mittels einer zusätzlichen Vakuumfolie. In fixiertem Zustand werden diese sodann mit dem zweiten Formteil zusammengesetzt, wenn das zweite Formteil belegt worden ist. Vorzugsweise erfolgt dies entweder gemäß einer ersten Alternative durch Anheben und Wenden ("stürzen") des Verbunds aus erstem Formteil und Formkern bzw. Formkernen mit darauffolgendem Absenken auf das zweite Formteil, oder gemäß einer zweiten Alternative durch Anheben und Wenden der Belegung bzw. des Gelegeverbunds des zweiten Formteils, entweder im Verbund mit dem zweiten Formteil oder separat, mit anschließendem separaten Anhaben und Wenden des zweiten Formteils. Bei dem Vorgehen gemäß der zweiten Alternative kann optional die Anordnung aus erstem Formteil und Formkern mittels Vakuumfolie fixiert werden. Die Anordnung aus zweitem Formteil und Gelegeverbund wird optional ebenfalls mit Vakuumfolie fixiert, falls ein Anheben und Wenden im Verbund erfolgen soll. Fall nu die Belegung bzw. der Gelegeverbund des zweiten Formteils ohne das Formteil angehoben und gewendet werden soll, bevor das zweite Formteil aufgesetzt wird, wird optional die Belegung bzw. der Gelegeverbund mittels Vakuumfolie fixiert.

Dem Ansatz, mehrere Teile in die jeweiligen Folien einzulegen und dann mittels Vakuumfolie zueinander zu fixieren, wenn die Formteile noch offenliegend vorliegen, liegt die Erkenntnis zugrunde, dass die verschiedenen notwendigen Schichten für das Rotorblatt und die Rotorblattherstellung mit der größten Maßhaltigkeit eingelegt werden können, wenn die Formteile nach oben offen liegend vorgehalten werden.

Besonders bevorzugt wird bei dem erfindungsgemäßen Verfahren zur Herstellung eines Windenergieanlagen-Rotorblattes nach dem Zuführen von Injektionswerkstoff ein Teil des Schüttguts aus dem Formkern entfernt Dies kann vor oder nach dem Schritt des Aushärtens erfolgen. Ein Vorteil des Entfernens von Schüttgut aus dem Hohlkörper ist das erleichterte Entnehmen des Formkerns.

Gemäß einer besonders bevorzugten Ausführungsform der vorliegenden Erfindung wird das vorbereitete Paket aus Formteilen, Formkern bzw. Formkernen, Faserwerkstoff und Folienmaterial mit Versorgungsanschlüssen ausgestattet, die einerseits das Erzeugen eines Unterdrucks in dem Raum zwischen Formkern und Formteilen erlauben, und andererseits die Zufuhr von Injektionswerkstoff ermöglichen. Hierbei ist besonders bevorzugt, wenn die Anschlüsse für eine oder mehrere Fluidleitungen sowie für die Zufuhr von Injektionswerkstoff so verlegt werden, dass ein mittels der Fluidleitungen in dem Raum zwischen Formteilen und Formkern erzeugter Unterdruck dazu führt, dass der Injektionswerkstoff zuerst den oder die Stege durchtränkt, welche die Formteile gegeneinander abstützen. Insbesondere wird dabei der bzw. werden die Anschlüsse für die Injektionswerkstoffzufuhr so angeordnet, dass der mittels des Unterdrucks aus den Fluidleitungen in den Zwischenraum zwischen Formkern und Formteile gezogene Injektionswerkstoff als erstes auf den oder die Stege trifft. Der Injektionswerkstoff muss sodann bei Aufrechterhaltung des Unterdrucks zuerst vollständig den Steg durchfließen, bevor er an der Verbindungsstelle zwischen Steg und äußeren Faserstoffschichten in diese übergehen kann. Hierdurch wird die Sicherheit erhöht, eine vollständige Durchtränkung der gesamten Struktur zu erreichen. Bei bekannten Verfahren besteht die Gefahr, dass bei einem zu schnellen Durchtränken und Fließen des Injektionswerkstoffs entlang der äußeren Faserwerkstoffschichten, die der Umfangsfläche des herzustellenden Rotorblatts entsprechen, der Injektionswerkstoff nicht vollständig in den Steg eindringt. Hierdurch wird die strukturelle Integrität des Rotorblattes gefährdet.

Die Erfindung in ihrer bevorzugten Ausführungsform vermeidet dieses Problem.

Das erfindungsgemäße Verfahren zur Herstellung eines Windenergieanlagen-Rotorblattes umfasst ferner das Erzeugen eines Unterdrucks zwischen Formteilen und Formkern. Das Verfahren wird vorzugsweise dazu eingesetzt, um an den Raum zwischen Formkern und Formteil einen Unterdruck anzulegen.

Bei bekannten Verfahren beruht das Erzeugen eines Unterdrucks zwischen Formteilen und Formkern im Wesentlichen darauf, dass nach dem Anschließen der Fluidleitungen an die dafür vorgesehenen Anschlüsse ein Unterdruck in den Fluidleitungen bzw. mindestens einer Fluidleitung erzeugt wird und mittels eines Manometers überprüft wird. Sobald der Unterdruck ausreichend stark ist, wird die Vorrichtung druckdicht verschlossen, wodurch der Unterdruck konstant gehalten werden soll. Nachfolgend wird sodann die Zufuhr von Injektionswerkstoff in den Raum zwischen Formkern und Formteilen freigegeben, und der Injektionswerkstoff breitet sich aus. Wenn es produktionsbedingt (oder aufgrund anderer Umstände) zu Leckagen in der Fluidführung kommt, ist es bei bekannten Verfahren notwendig gewesen, manuell
Gegenmaßnahmen einzuleiten, um den Druckverlust zu stoppen und nachträglich erneut zu evakuieren. Dies erfordert hohen personellen und finanziellen Aufwand.

Gemäß einer bevorzugten Ausführungsform des erfindungsgemäßen Verfahrens zur Herstellung eines Windenergieanlagen-Rotorblattes umfasst das Erzeugen des Unterdrucks zwischen Formteilen und Formkern, die Schritte - Einstellen eines Druck-Sollwertes, vorzugsweise mittels einer Bedieneinheit einer elektronischen Steuereinheit, welche vorzugsweise eine speicherprogrammierbare Steuereinheit (SPS) ist,
- Einstellen einer Sollzeit, für welche der Druck-Sollwert aufrechterhalten soll,
- Übermitteln des Druck-Sollwertes und der Sollzeit an die elektronische Steuereinheit,
- Erfassen eines Druckwertes in einer Fluidleitung, die mit dem Raum zwischen Formteilen und Formkern fluidleitend in Verbindung steht, vorzugsweise mittels mindestens eines Drucksensors,
- Übermitteln des Druckwertes an die elektronische Steuereinheit,
- Ermitteln einer Differenz zwischen dem Druck-Sollwert und dem Druckwert mittels der elektronischen Steuereinheit,
- Entlüften der Fluidleitung, bis die Differenz gleich null ist, wodurch ein Unterdruck angelegt wird,
- Aufrechterhalten des Unterdrucks während der Dauer der eingestellten Sollzeit, oder bis zur einem automatischen oder manuell herbeigeführten Abbruch, und
- Belüften der Fluidleitung, bis dort Umgebungsdruck herrscht. Die Erfindung gemäß diesem Aspekt macht sich die Erkenntnis zunutze, dass eine automatisierte Steuerung bzw. Regelung und zugleich eine ständige Überwachung des Verfahrensverlaufs, durch Überwachung des Unterdrucks in der entsprechenden Fluidleitung sowie durch gezielte Steuereingriffe in ein oder mehrere Ventile gewährleistet werden kann, die in der Fluidleitung zwischen dem Raum zwischen Formkern und Formteilen und einer Vakuumpumpe angeordnet sind. Die Koordinierung der Druckwert-Überwachung einerseits und der notwendigen Steuer- bzw. Regeleingriffe in die Ventile andererseits wird erfindungsgemäß von einer elektronischen Steuereinheit gewährleistet, die vorzugsweise als speicherprogrammierbare Steuereinheit (SPS) ausgebildet ist. Der besondere Vorteil einer solchen SPS ist derjenige, dass mittels einer Firmware in der SPS über zugeschaltete Bediengeräte und Anzeigeelemente unmittelbar eine Steuerung und Programmierung möglich ist. Hierdurch kann mit geringem programmtechnischen Aufwand auch eine komplexe Folge von Arbeitsabläufen vorgesehen werden. Vorzugsweise sind der oder die der Fluidleitung zugeordneten Drucksensoren zur Datenübertragung mit einem Eingang der SPS verbunden. Das eine oder die mehreren zu steuernden bzw, zu regelnden Ventile sind weiter vorzugsweise mit einem Ausgang der SPS zur Datenübertragung verbunden. Die SPS selber ist vorzugsweise dazu eingerichtet, die von dem oder den Drucksensoren erfassten Druckwerte zu protokollieren, und durch Abgleich mit zuvor abgespeicherten bzw. hinterlegten Sollwerten zu vergleichen. Weiter vorzugsweise ist die Steuereinheit dazu eingerichtet, die erfassten Signale auch zu verarbeiten. Zudem ist die Steuereinheit erfindungsgemäß dazu eingerichtet, die ihr aufgegebenen Steuerungs- bzw. Regelaufgaben für eine vorbestimmte Zeit, die ebenfalls vorzugsweise mittels der Bedieneinheit eingebbar ist, auszuführen. Auf diese Weise ist es erfindungsgemäß möglich, ein Standardprozedere zum Einziehen von Injektionswerkstoff in die Struktur eines Rotorblatts mittels Vakuum vorzugeben, maßgeblich bestimmt durch den anzulegenden Unterdruck und die Zeit, für welche der Unterdruck aufrechterhalten werden soll. Besonders vorteilhaft ist die Steuereinrichtung auch dazu eingerichtet, entlang eines vorbestimmten zeitlichen Verlaufs verschiedene Unterdruck-Stufen in der Fluidleitung einzustellen. So wird es möglich, beispielsweise zu Beginn der Unterdruckerzeugung ein stärkeres oder weniger starkes Druckgefälle zu erzeugen.

Gemäß einer bevorzugten Ausführungsform, wird während des Ablaufs der Sollzeit nach Erreichen des Druck-Sollwertes der angelegte Unterdruck mittels folgender Schritte nachgeregelt:
- Belüften des Raums zwischen Formkern und Formteil, wenn die von der elektronischen Steuereinheit ermittelte Differenz größer null ist, und
- Entlüften des Raums zwischen Formkern und Formteil, wenn die von der elektronischen Steuereinheit ermittelte Differenz kleiner null ist. Wenn die Differenz größer 0 ist, so bedeutet dies, dass der Druck in der Rotorblatt-Struktur, also in dem Raum zwischen Formkern und Formteilen, geringer als der Druck-Sollwert ist. Eine Differenz kleiner 0 bedeutet, dass der Druck in dem Raum zwischen Formkern und Formteilen größer als der Druck-Sollwert ist, was bedeutet, dass nachgeregelt werden muss.

Vorzugsweise wird zum Nachregeln des angelegten Unterdrucks in der Fluidleitung Luft durch ein erstes Ventil, vorzugsweise ein Regelventil gefördert, welches mittels der elektronischen Steuereinrichtung in Abhängigkeit der Differenz freigeb-und sperrbar ist.

Weiter vorzugsweise wird zum beschleunigten Entlüften und/oder zum beschleunigten Belüften der Fluidleitung Luft durch einen Bypass gefördert, wobei der Bypass mittels eines zweiten, von der elektronischen Steuereinrichtung angesteuerten Ventils freigeb-und sperrbar ist. Das zweite Ventil hat hierzu vorzugsweise eine größere Nennweite als das erste Ventil, weil die beim beschleunigten Be- und Entlüften auf Umgebungsdruck oder von Umgebungsdruck mit einem deutlich höheren Massenstrom gefördert werden können.

Weiter vorzugsweise umfasst das Verfahren den Schritt:
- Protokollieren der, vorzugsweise von dem mindestens einen Drucksensor, ermittelten Druckwerte während der Dauer der eingestellten Soll-Zeit.

In einer weiteren Weiterbildung des Verfahrens umfasst dieses einen, mehrere oder sämtliche der Schritte:
- Abbrechen der Unterdruckbeaufschlagung und Belüften der Fluidleitung auf Umgebungsdruck, sobald die protokollierten Druckwerte um mehr als einen voreingestellten Toleranzwert von dem Druck-Sollwert abweichen,
- Abbrechen der Unterdruckbeaufschlagung und Belüften der Fluidleitung auf Umgebungsdruck, sobald die protokollierten Druckwerte mit einer höheren als einer voreingestellten maximalen Anstiegsrate zunehmen, und/oder
- Erstellen eines Druckverlaufsdiagramms für die Dauer der eingestellten Soll-Zeit oder die Dauer der Unterdruckbeaufschlagung bis zu deren Abbruch. Besonders bevorzugt ist es somit möglich, bei inaktiver Nachregelung durch die elektronische Steuereinrichtung den zeitlichen Druckverlauf in der mit dem Raum zwischen Formkern und Formteilen verbundenen Fluidleitung zu protokollieren. Hierdurch wird insbesondere die Dichtigkeit überprüfbar. Liegt der Druckverlust entlang eines vorbestimmten Zeitintervalls über einem vorbestimmten Grenzwert, so liefert dies eine zuverlässige Aussage dafür, dass eine unzulässig hohe Undichtigkeit im System vorhanden ist, was mit großer Wahrscheinlichkeit eine nicht ausreichende Befüllung mit Injektionswerkstoff zur Folge hat. Ausgehend von einem derart erstellten Fehlerprotokoll können weitere Wartungsmaßnahmen eingeleitet werden. Die Analyse des erstellten Druckverlaufsdiagramms ermöglicht zudem das Überprüfen weiterer Einflussfaktoren, beispielsweise Störungen der Anlage (dies vorzugsweise in Zusammenschau mit weiteren Verlaufsdiagrammen anderer Messgrößen, beispielsweise der Spannungsversorgung oder von Betriebsparametern, beispielsweise der Vakuumpumpe etc).

Die Erfindung wird im Folgenden anhand eines bevorzugten Ausführungsbeispiels und unter Bezugnahme auf die beiliegenden Figuren näher beschrieben.

Hierbei zeigen
- Figuren 1 bis 9: verschiedene Stadien des Verfahrens zur Herstellung eines Formkerns und des Verfahrens zur Herstellung eines Windenergieanlagen-Rotorblatts, und
- Figur 10: eine schematische Darstellung einer Einrichtung zum Erzeugen von Vakuum, insbesondere zur Verwendung in einem erfindungsgemäßen Verfahren zum Erzeugen von Unterdruck.

Sofern in den Figuren identische oder strukturell ähnliche Merkmale enthalten sind, werden diese, wo zweckmäßig, mit gleichen Bezugszeichen versehen.

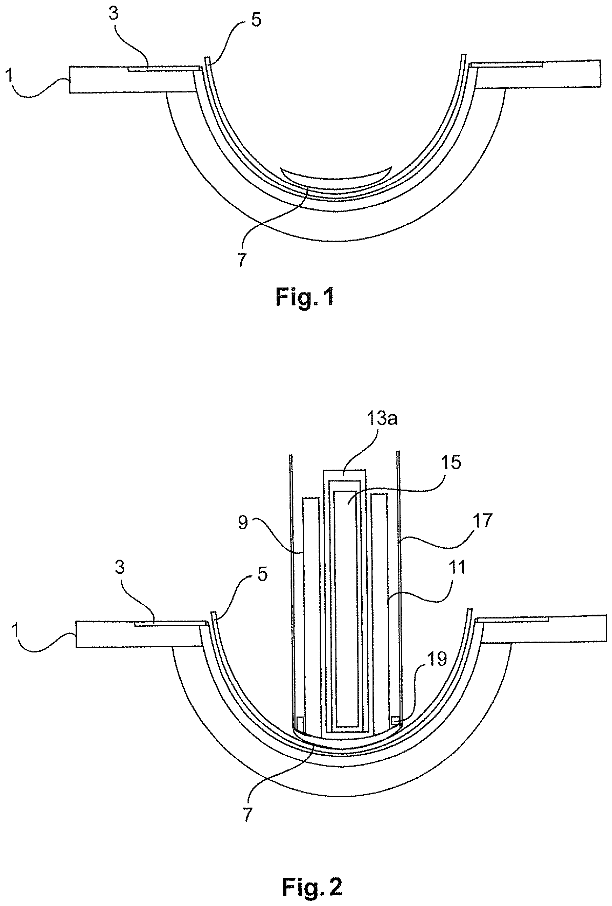

In Figur 1 ist der Belegevorgang eines ersten Formteils 1 dargestellt. In das Formteil 1, welches eine erste Formhälfte für ein Windenergieanlagen-Rotorblatt schematisch darstellt, sind eine Transferfolie 3, eine Faserwerkstoff-Schicht 5, und ein Holm-Gurt 7 in das Formteil 1 eingelegt.

Wie sich aus Figur 2 ergibt, wird im Anschluss an das Belegen entsprechend Figur 1 gemäß einem bevorzugten Ausführungsbeispiel ein erster Steg 9 und ein zweiter Steg 11 vorgesehen. Der erste Steg 9 und der zweite Steg 11 werden mit dem Holmgurt 7 bündig abschließend in dem Formteil 1 angeordnet. In alternativen Ausgestaltungen ist es vorgesehen, dass nur ein Steg, gar kein Steg oder mehr als zwei Stege eingesetzt werden. Zwischen den ersten und zweiten Steg 9, 11 ist ein Hohlkörper 13a eingeführt. Der Hohlkörper 13a ist teilweise mit Schüttgut 15 gefüllt. Der Hohlkörper 13a besteht aus einem druckdichten Material, beispielsweise Vakuum-Schlauchfolie.

An die Stege 9, 11 ist auf der dem inneren Hohlkörper 13a abgewandten Seite jeweils eine Schicht Vakuumfolie 17 angelegt, die gegen die Stege mittels jeweils einer Dichtung 19 abgedichtet wird.

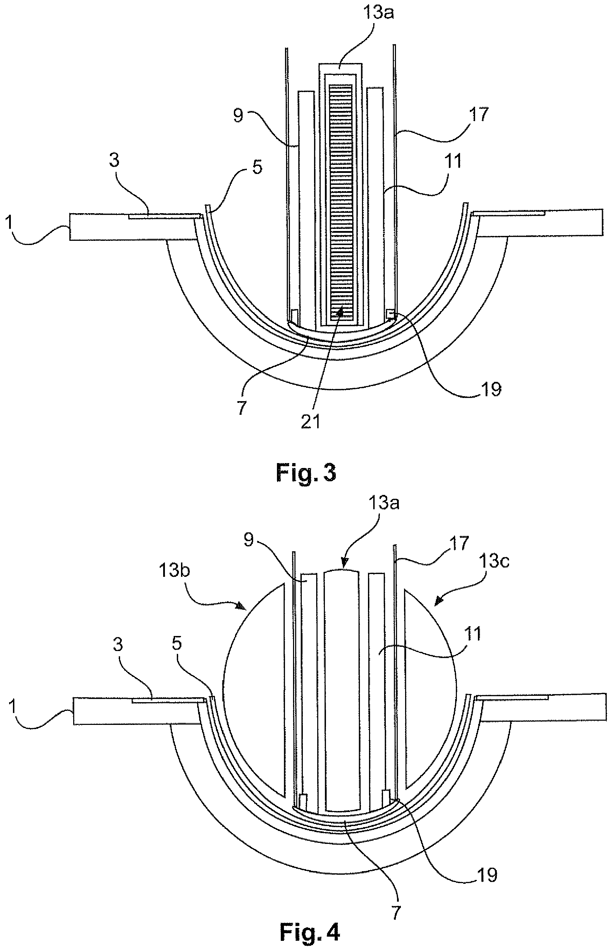

Gemäß einer alternativen Ausführungsform, die in Figur 3 dargestellt ist, kann zusätzlich oder alternativ zum Schüttgut ein Schlauchkörper verwendet werden, in dessen Innerem ein Abstandsgewebe (DSB) 21 vorgesehen ist.

Wie sich aus Figur 4 ergibt, werden die zwischen den Formteilen 9, 11 befindlichen Freiräume zur linken und rechten Seite jeweils mit einem weiteren Teil des herzustellenden Formkerns belegt, nämlich einem zweiten Hohlkörper 13b und einem dritten Hohlkörper 13c, die zusammen mit dem Hohlkörper 13a sodann später einen dreiteiligen Formkern bilden werden. Der zweite und dritte Hohlkörper 13b, c sind genauso wie der erste Hohlkörper 13a teilweise mit Schüttgut befüllt. Das Schüttgut wird mittels Einblasen vorzugsweise in die Hohlkörper 13a, b, c eingeführt.

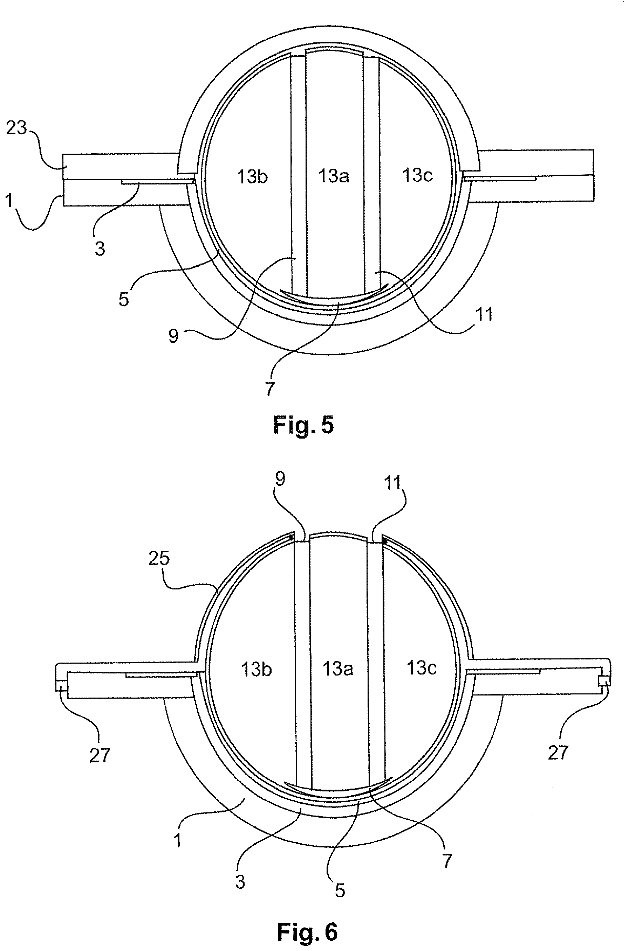

In Figur 5 ist ein weiterer nachfolgender Herstellungszustand abgebildet. Die Hohlkörper 13a, b, c sind vollständig mit Schüttgut befüllt. Zusätzlich ist vor dem vollständigen Befüllen ein zweites Formteil 23 auf das erste Formteil 1 gesetzt worden. Durch das bündige Aufsetzen des zweiten Formteils 23 auf das erste Formteil 1 wird optional eine geringe Kompression der Hohlkörper 13a, b, c herbeigeführt, um ein optimales Anpassen zu unterstützen. In dem abgebildeten Zustand können die Hohlkörper 13a, b, c mit Unterdruck beaufschlagt werden. Hierdurch findet eine Verfestigung statt, die allerdings nicht zu einer Volumenabnahme oder Formänderung der Hohlkörper selbst führt. Die Formstabilität wird durch die den Umgebungsdruck widerstehenden Schüttgut-Partikel gewährleistet.

Im Anschluss an das Evakuieren der Hohlkörper, wodurch der - gemäß dieser Ausführungsform mehrteilige - Formkern hergestellt wird, wird das zweite Formteil abgehoben und zwischenzeitlich beiseite gestellt. Die Positionen der Hohlkörper 13a, b, c, der Stege 9, 11 und der Folienschichten zwischen den Hohlkörpern (bzw. dem Formkern) und der dem ersten Formteil 1 werden zueinander fixiert, indem gemäß Figur 6 eine weitere Vakuumfolie 25 außen auf die Hohlkörper 13b, 13c und die offene Seite des Formteils 1 gelegt wird, mittels Dichtung 27 abgedichtet wird und sodann evakuiert wird. Dies gewährleistet, dass alle in Figur 6 gezeigten Elemente auch bei einem Wenden und Abheben des Formteils 1 relativ zu diesem an ihrem Platz bleiben.

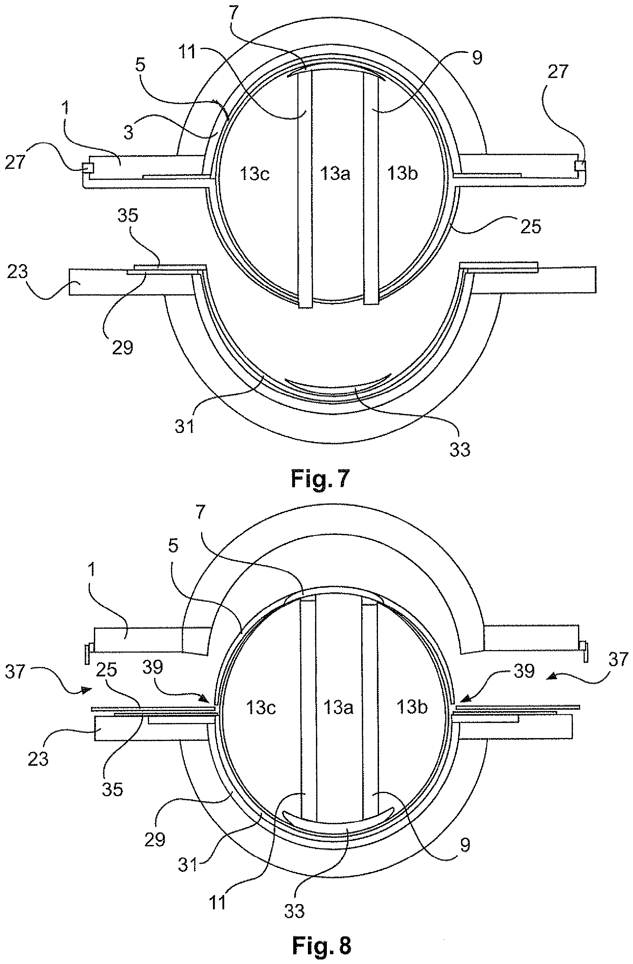

Parallel zu dem ersten Formteil 1 wird ein zweites Formteil 23 auf gleiche Weise wie das erste Formteil belegt. Figur 7 zeigt ein solches zweites Formteil 23, welches eine Transferfolie 29 aufweist, eine Faserwerkstoff-Schicht 31, einen Holmgurt 33 und zusätzlich eine Schäftung 35. Die Schäftung 35 besteht ebenfalls aus Faserwerkstoff. Die Schäftung 35 kann als separates Schichtgelege aufgelegt werden. Besonders bevorzugt ist es allerdings, wenn die Schäftung 35 integraler Bestandteil der Faserwerkstoff-Schicht 31 ist. Hierdurch werden die Unterbrechungen im Fasergelege minimiert, was im Hinblick auf die Festigkeit des herzustellenden Bauteils als vorteilhaft erscheint.

Auch in Figur 7 dargestellt ist der nächste Fertigungsschritt, in welchem die beiden Formteile 1, 23 und der Formkern mit den befüllten, verfestigten Hohlkörpern 13a, b, c zusammengesetzt werden. Hierzu wird gemäß einer ersten Alternative die mittels der Vakuumfolie 25 fixierte Anordnung aus erstem Formteil 1 und Formkern gestürzt und von oben auf das mittlerweile belegte zweite Formteil 23 abgesenkt. Gemäß einer zweiten Alternative wird nicht die Anordnung aus erstem Formteil 1 und Formkern mit Vakuumfolie fixiert und gestürzt, sondern das belegte zweite Formteil mit Vakuumfolie fixiert, gestürzt und auf die Anordnung aus erstem Formteil 1 und Formkern abgesenkt. Hierbei erfolgt Auflegen der Belegung des zweiten Formteils entweder im Verbund mit dem zweiten Formteil 23 oder separat von dem zweiten Formteil 23 als Gelegeverbund. Hierbei wird dann das zweite Formteil nach dem Auflegen des geleverbunds auf die Anordnung aus erstem Formteil 1 und Formkern das zweite Formteil als Letztes auf die Anordnung samt Gelegeverbund aufgesetzt.

Optional wird bei der zweiten Alternative zusätzlich auch die Anordnung aus erstem Formteil 1 und Formkern mittels Vakuumfolie fixiert.

Nach dem Zusammensetzen des ersten und zweiten Formteils 1, 23 wird in einem ersten Durchtrennungsbereich 37 die Vakuumfolie 25 aufgetrennt, was ein Entformen infolge des Einströmens von Luft zwischen das erste Formteil 1 und den Rest der Anordnung ermöglicht.

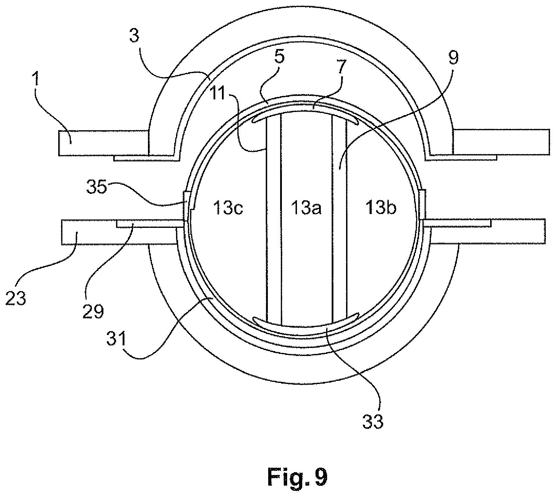

Als nächstes wird der nach außen überhängende Teil der Vakuumfolie 25 entfernt, indem die Vakuumfolie in einem zweiten Durchtrennungsbereich 39 möglichst nah an den Faserwerkstoff-Schichten, und somit möglichst nah an der designierten Form des Rotorblattes abgetrennt wird. In einem nächsten Schritt, der in Figur 9 dargestellt ist, wird die Schäftung 35, welche nun frei zugänglich ist, nach oben angelegt, wo sie sich an die Faserwerkstoff-Schichten anschmiegt. Hierdurch wird ein möglichst knickfreier und durchgehender Übergang zwischen den Faserwerkstoff-Schichten beider Blatthälften erreicht. Hieran anschließend wird die erste Formhälfte bzw. das erste Formteil 1, welches zwischenzeitlich erneut mit Transferfolie 3 ausgelegt wurde, auf das zweite Formteil 23 aufgesetzt. Alternativ kann die Transferfolie auch nach dem Anlegen der Schäftung 35 auf die Anordnung aufgelegt werden, bevor das erste Formteil 1 abgesetzt wird. Nach dem Abdichten der Formteile 1, 23 gegeneinander wird in an sich bekannter Weise in dem Volumen zwischen Formkern und Formteilen Unterdruck erzeugt, und Harz in einem Vakuuminjektionsverfahren injiziert. Die hierzu erforderlichen Fluidleitungen und Anschlüsse sind einer kompakten Darstellung zuliebe nicht dargestellt worden.

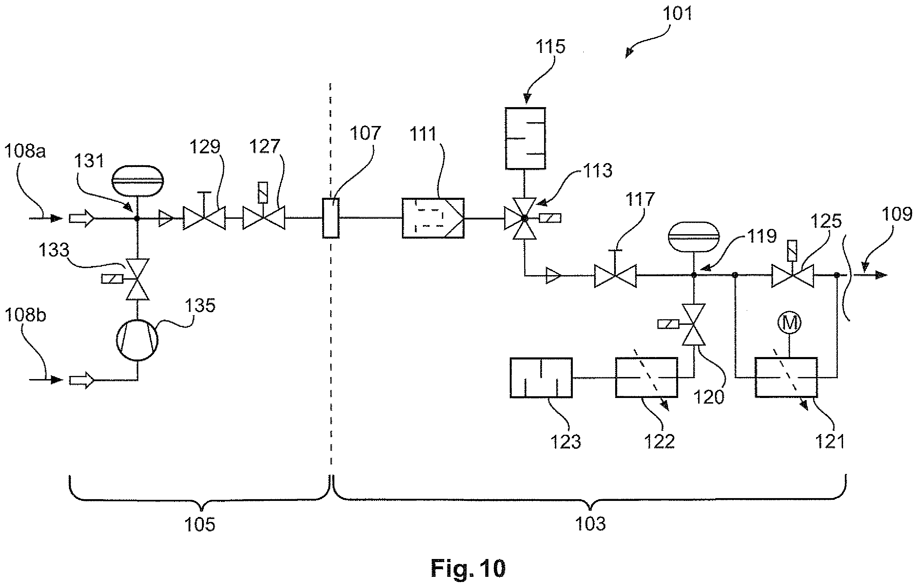

In Figur 10 ist eine Einrichtung 101 zum Erzeugen eines Unterdrucks dargestellt. Die Einrichtung 101 weist eine Regeleinheit 103 auf. Die Regeleinheit 103 ist mittels einer Kupplung 107 an eine Armatureneinheit 105 zum Anschluss an entsprechende Anschlüsse eingerichtet, die dem Paket aus Formkern, Formteilen, Faserwerkstoff und Folienmaterial zugeordnet sind. Innerhalb der Regelstation sind an einer Fluidleitung verschiedene Armaturen angeordnet. Die Fluidleitung weist einen Filter 111 auf, der zum Säubern des aus der Form abgeführten oder in die Form eingelassenen Gases eingerichtet ist. Anschließend an den Filter 111 ist ein Dreiwegeventil 113 vorgesehen, welches mit einem Schalldämpfer 115 zu einer Entlüftungsseite hin verbunden ist. Das Dreiwegeventil 113 ist dazu eingerichtet, die Fluidleitung zu belüften und drucklos zu machen, wenn die Kupplung 107 geöffnet werden soll. Weiterhin ist in der Fluidleitung eine Absperrarmatur 117 vorgesehen. An einer Verbindungsstelle 119 wird innerhalb der Regelstation der Druck in der Fluidleitung abgegriffen. Ein von der Zweigstelle 119 abgehender Zweig weist ein oder mehrere Stellventile 120, 122 und vorzugsweise einen Schalldämpfer 123 auf. Die Armaturen 120, 122 dienen in erster Linie dazu, den Druck in der Fluidleitung mittels Belüften im Nachregelbetrieb zu erhöhen. Armatur 122 ist ein Magnetventil, welches bei Unterschreiten eines vorbestimmten Unterdrucks - also bei zu starkem Unterdruck - geöffnet wird.

In Figur 10 rechts neben der Zweigstelle 119 abgebildet ist ein Bypass vorgesehen. In dem Bypass ist eine Armatur, beispielsweise ein Kugelhahn, mit elektrischem Stellantrieb angeordnet. Der Bypass dient dazu, die Fluidleitung mittels Ventil 125 beschleunigt zu be- und/oder entlüften, um entweder von Umgebungsdruck schnell auf dem Druck-Sollwert oder vom Druck-Sollwert oder dem angelegten Unterdruck in der Fluidleitung schnell auf Umgebungsdruck zu gelangen. Dies geschieht unter Überbrückung eines , vorzugsweise elektrischen, Stellventils 121, vorzugsweise als Magnetventil ausgebildet, welches vorrangig und vorzugsweise zum Nachregeln eingesetzt wird. Wenn der Druck in der Fluidleitung beim Nachregeln weiter abgesenkt werden soll, wird das Ventil 121 mittels der elektronischen Steuereinrichtung zum Freigeben der Verbindung zur Vakuumpumpe freigegeben.

Die Vakuumpumpe bzw. Vakuumquelle ist nicht dargestellt, sondern lediglich durch Pfeil 109 angedeutet.

Auf der der Vakuumerzeugung gegenüberliegenden Seite der Regelstation 103 sind als Bestandteile der Armatureneinheit 105 beispielsweise einige Armaturen abgebildet. So sind ein Magnetventil 127, ein Absperrventil 129 in der formseitigen Fluidleitung vorgesehen. An einer Zweigstelle 131 wird der Fluiddruck abgegriffen, welcher in der Fluidleitung und in dem Raum zwischen dem Formkern und den Formteilen anliegt. In Figur 10 ist ferner eine mit der Zweigstelle 131 gekoppelte Zweigleitung dargestellt, mittels welcher eine Reserve-Vakuumpumpe, angedeutet durch Pfeil 108b, angeschlossen ist. Die Reserve-Vakuumpumpe ist dazu eingerichtet, im abgekoppelten Zustand der primären Vakuumpumpe 109 das angelegte Vakuum im System aufrechtzuerhalten.

Durch Pfeil 108a, ist ein Anschluss zu dem Raum zwischen Formkern und Formteilen angedeutet.

Anstelle der ständigen Versorgung der Fluidleitung durch eine Vakuumpumpe ist es optional vorgesehen, mittels einer weiteren Zweigleitung eine zweite Fluidleitung anzuschließen, die bei Bedarf mit der ersten Fluidleitung verbunden werden kann. In der zweiten Fluidleitung wird gemäß dieser Option ebenfalls ein Unterdruck aufgebaut und gehalten. Für den Fall, dass in der ersten Fluidleitung infolge von Undichtigkeiten oder Belüftung der Druck steigt, kann durch Verbinden mit der zweiten Fluidleitung der Druckverlust kompensiert werden, ohne dass hierzu erneut die Vakuumpumpe in Betrieb genommen werden muss. Dies führt zu erheblichen Effizienzsteigerungen. Die zweite Fluidleitung ist vorzugsweise strukturell gleich aufgebaut wie die erste Fluidleitung. Der Bypass, welcher in der ersten Fluidleitung vorgesehen ist, kann allerdings entfallen. In der zweiten Fluidleitung kann zudem auf ein Stellglied zum Belüften (vgl. Elemente 20, in Figur 10) verzichtet werden. Hinsichtlich des strukturellen Ausbaus wird insofern auf die Darstellung zu Figur 10 verwiesen, die insoweit identisch ist.

## Patentansprüche

1. Verfahren zur Herstellung eines Formkerns für die einteilige Herstellung von Windenergieanlagen-Rotorblättern, umfassend die Schritte:
- Bereitstellen eines flexiblen Hohlkörpers, beispielsweise eines Folienschlauchs,
- Einfügen des Hohlkörpers zwischen mindestens zwei Formteile, die derart zueinander angeordnet sind, dass sie eine Negativform des herzustellenden Rotorblattes bilden,
- Befüllen des Hohlkörpers mit Schüttgut, vor und nach dem Einfügen des Hohlkörpers zwischen die Formteile, und
- Erzeugen eines Unterdrucks in dem Hohlkörper, nachdem dieser befüllt und eingefügt worden ist, derart, dass der Hohlkörper erstarrt,
wobei der Hohlkörper vor dem Schritt des Einfügens teilweise mit Schüttgut befüllt wird und nach dem Schritt des Einfügens vollständig mit Schüttgut befüllt wird.

2. Verfahren nach Anspruch 1,
wobei der Hohlkörper vor dem Schritt des Einfügens zu 20% bis 70% mit Schüttgut befüllt wird.

3. Verfahren nach Anspruch 1 oder 2, umfassend den Schritt:
- Erzeugen eines kurzzeitigen Überdrucks in dem mit Schüttgut befüllten, zwischen die Formteile eingefügten Hohlkörper.

4. Verfahren nach Anspruch 3, umfassend den Schritt:
- Nachfüllen von Schüttgut nach dem Schritt des Erzeugens von Überdruck.

5. Verfahren nach einem der vorstehenden Ansprüche, umfassend den Schritt:
- Neigen des, vorzugsweise bereits zwischen die Formteile eingefügten, Hohlkörpers in eine zur Horizontalen angewinkelte Position, vorzugsweise in einem Bereich von 5° bis 60°.

6. Verfahren nach einem der vorstehenden Ansprüche,
wobei der Formkern ein mehrteiliger Formkern ist, wobei jedes dieser Teile hergestellt wird mit den Schritten:
- Einfügen des Hohlkörpers zwischen Formteile, die derart zueinander angeordnet sind, dass sie eine Negativform abbilden,
- Befüllen des Hohlkörpers mit Schüttgut, vor oder nach dem Einfügen des Hohlkörpers zwischen die Formteile, und
- Erzeugen eines Unterdrucks in dem Hohlkörper, nachdem dieser befüllt und eingefügt worden ist, wobei der Hohlkörper in einer der Negativform entsprechenden Positivform erstarrt, wobei für jedes der Teile der jeweilige Hohlkörper vor dem Schritt des Einfügens mit Schüttgut befüllt wird und nach dem Schritt des Einfügens vollständig mit Schüttgut befüllt wird.

7. Verfahren nach Anspruch 6,
wobei für jedes der Teile
- der jeweilige Hohlkörper vor dem Schritt des Einfügens zu 20% bis 70% mit Schüttgut befüllt wird, und für jedes der Teile einer, mehrere oder sämtliche der Schritte durchgeführt werden:
- Erzeugen eines kurzzeitigen Überdrucks in dem mit Schüttgut befüllten, zwischen die Formteile eingefügten Hohlkörper,
- Nachfüllen von Schüttgut nach dem Schritt des Erzeugens von Überdruck, und/oder
- Neigen des, vorzugsweise bereits zwischen die Formteile eingefügten, Hohlkörpers in eine zur Horizontalen angewinkelte Position, vorzugsweise in einem Bereich von 5° bis 60°.

8. Verfahren nach einem der vorstehenden Ansprüche,
wobei als Schüttgut ein, vorzugsweise kohäsionsloses, Schüttgut verwendet wird, das aus kugelförmigen oder polyederförmigen Partikeln besteht, wobei vorzugsweise der mittlere Durchmesser der Partikel 20 mm oder weniger mm beträgt.

9. Verfahren nach einem der Ansprüche 6 bis 8,
wobei als Formteil ein oder mehrere sich zwischen zwei Formteilen erstreckende und die Formteile gegeneinander abstützende Stege vorgesehen werden.

10. Verfahren zur einteiligen Herstellung eines Windenergieanlagen-Rotorblattes, umfassend die Schritte:
- Herstellen eines Formkerns nach einem Verfahren gemäß einem der vorstehenden Ansprüche,
- Bereitstellen mindestens eines ersten Formteils und eines zweiten Formteils, welche zusammen eine Negativform des Rotorblattes bilden,
- Belegen des Formkerns oder der Formteile mit einer oder mehreren Faserwerkstoff-Schichten,
- Zusammensetzen der Formteile und des Formkerns,
- druckdichtes Verschließen des Verbunds aus Formkern und Formteilen,
- Erzeugen eines Unterdrucks zwischen den Formteilen und dem Formkern, und
- Zuführen von Injektionswerkstoff zwischen die Formteile und den Formkern unter Unterdruck, und
- Aushärten des Injektionswerkstoffes, nachdem dieser den Faserwerkstoff durchtränkt hat.

11. Verfahren nach Anspruch 10,
umfassend den Schritt:
Belegen des Formkerns oder der Formteile mit einer, mehreren oder sämtlichen der Folgenden:
- eine Transferfolie, vorzugsweise als äußerste Schicht,
- eine Vakuumfolie, vorzugsweise als innerste Schicht,
- eine oder mehrere erste Fluidleitungen zum Beaufschlagen des Volumens zwischen dem oder den Formkernen und den Formteilen mit Unterdruck,
- eine oder mehrere zweite Fluidleitungen zur Zufuhr von Injektionswerkstoff in das Volumen zwischen dem oder den Formkernen und den Formteilen mit Unterdruck,
- einem oder mehreren Holmgurten,
- einem oder mehreren weiteren, beispielsweise als Steg oder Wuchtkammer ausgebildeten Formteilen, beispielsweise Preformteilen, wobei der oder die Formteile und Holmgurte jeweils mit Injektionswerkstoff durchtränkt sind oder während des Schritts des Zuführens von Injektionswerkstoff zwischen die Formteile und den oder die Formkerne unter Unterdruck durchtränkt werden.

12. Verfahren nach einem der Ansprüche 10 oder 11, wobei
- wenigstens das erste Formteil belegt wird,
- der oder die Formkerne in das erste Formteil eingesetzt werden,
- vorzugsweise der oder die Formkerne und das erste Formteil zu einander fixiert werden, beispielsweise mittels einer Vakuumfolie, und
- der oder die Formkerne und das erste Formteil in fixiertem Zustand mit dem zweiten Formteil zusammengesetzt werden, wenn das zweite Formteil belegt worden ist und/oder wenn die Belegung des zweiten Formteils auf die Anordnung des ersten Formteils und des oder der Formkerne aufgelegt worden ist.

13. Verfahren nach einem der Ansprüche 10 bis 12, wobei
nach dem Zuführen von Injektionswerkstoff ein Teil des Schüttguts aus dem Formkern entfernt wird.

14. Verfahren nach einem der Ansprüche 10 bis 13, wobei
Anschlüsse für eine oder mehrere Fluidleitungen sowie für die Zufuhr von Injektionswerkstoff so verlegt werden, dass ein mittels der Fluidleitungen in dem Raum zwischen Formteilen und Formkern erzeugter Unterdruck dazu führt, dass der Injektionswerkstoff zuerst den oder die die Formteile gegeneinander abstützenden Steg(e) durchtränkt.

15. Verfahren nach einem der Ansprüche 10 bis 14, wobei das Erzeugen des Unterdrucks zwischen Formteilen und Formkern die Schritte umfasst:
- Einstellen eines Druck-Sollwertes, vorzugsweise mittels einer Bedieneinheit einer elektronischen Steuereinheit, welche vorzugsweise eine speicherprogrammierbare Steuereinheit (SPS) ist,
- Einstellen einer Sollzeit, für welche der Druck-Sollwert aufrechterhalten soll,
- Übermitteln des Druck-Sollwertes und der Sollzeit an die elektronische Steuereinheit,
- Erfassen eines Druckwertes in einer Fluidleitung, die mit dem Raum zwischen Formteilen und Formkern fluidleitend in Verbindung steht, vorzugsweise mittels mindestens eines Drucksensors,
- Übermitteln des Druckwertes an die elektronische Steuereinheit,
- Ermitteln einer Differenz zwischen dem Druck-Sollwert und dem Druckwert mittels der elektronischen Steuereinheit,
- Entlüften der Fluidleitung, bis die Differenz gleich null ist, wodurch ein Unterdruck angelegt wird,
- Aufrechterhalten des Unterdrucks während der Dauer der eingestellten Sollzeit, oder bis zur einem automatischen oder manuell herbeigeführten Abbruch, und
- Belüften der Fluidleitung, bis dort Umgebungsdruck herrscht, wobei während des Ablaufs der Sollzeit nach Erreichen des Druck-Sollwertes der angelegte Unterdruck mittels folgender Schritte nachgeregelt wird:
- Belüften des Raums zwischen Formkern und Formteil, wenn die von der elektronischen Steuereinheit ermittelte Differenz größer null ist, und
- Entlüften des Raums zwischen Formkern und Formteil, wenn die von der elektronischen Steuereinheit ermittelte Differenz kleiner null ist.

16. Verfahren nach Anspruch 15,
wobei zum Nachregeln des angelegten Unterdrucks in der Fluidleitung Luft durch ein erstes Ventil, vorzugsweise ein Regelventil, gefördert wird, welches mittels der elektronischen Steuereinrichtung in Abhängigkeit der Differenz freigeb- und sperrbar ist, und oder
wobei zum beschleunigten Entlüften und/oder zum beschleunigten Belüften der Fluidleitung Luft durch einen Bypass gefördert wird, wobei der Bypass mittels eines zweiten, von der elektronischen Steuereinrichtung angesteuerten Ventils freigeb- und sperrbar ist.

17. Verfahren nach Anspruch 15 oder 16,
umfassend den Schritt:
- Protokollieren der, vorzugsweise von dem mindestens einen Drucksensor, ermittelten Druckwerte während der Dauer der eingestellten Soll-Zeit.

18. Verfahren nach Anspruch 17,
umfassend einen, mehrere oder sämtliche der Schritte:
- Abbrechen der Unterdruckbeaufschlagung und Belüften der Fluidleitung auf Umgebungsdruck, sobald die protokollierten Druckwerte um mehr als einen voreingestellten Toleranzwert von dem Druck-Sollwert abweichen,
- Abbrechen der Unterdruckbeaufschlagung und Belüften der Fluidleitung auf Umgebungsdruck, sobald die protokollierten Druckwerte mit einer höheren als einer voreingestellten maximalen Anstiegsrate zunehmen, und/oder
- Erstellen eines Druckverlaufsdiagramms für die Dauer der eingestellten Soll-Zeit oder die Dauer der Unterdruckbeaufschlagung bis zu deren Abbruch.

## Claims

1. A process for the production of a mould core for the one-part production of wind power installation rotor blades, comprising the steps:
- providing a flexible hollow body, for example a film tube,
- inserting the hollow body between at least two mould portions which are so arranged relative to each other that they form a negative shape of the rotor blade to be produced,
- filling the hollow body with loose material prior to and after insertion of the hollow body between the mould portions, and
- producing a reduced pressure in the hollow body after it has been filled and inserted in such a way that the hollow body solidifies,
wherein prior to the insertion step the hollow body is partially filled with loose material and completely filled after the insertion step.

2. A process according to claim 1, wherein prior to the insertion step the hollow body is filled to 20% to 70% with loose material.

3. A process according to claim 1 or claim 2 comprising the step:
- producing a short-term increased pressure in the hollow body which has been filled with loose material and inserted between the mould portions.

4. A process according to claim 3 comprising the step:
- post-filling loose material after the step of producing increased pressure.

5. A process according to one of the preceding claims comprising the step:
- inclining the hollow body which has preferably already been inserted between the mould portions into an angled position relative to the horizontal, preferably in a range of 5° to 60°.

6. A process according to one of the preceding claims, wherein the mould core is a multi-part mould core, wherein each of said parts is produced with the steps:
- inserting the hollow body between mould portions, which are so arranged relative to each other that they form a negative shape,
- filling the hollow body with loose material prior to or after insertion of the hollow body between the mould portions, and
- producing a reduced pressure in the hollow body after it has been filled and inserted, wherein the hollow body solidifies in a positive shape corresponding to the negative shape, wherein for each of the parts the respective hollow body is filled with loose material before the insertion step and is completely filled with loose material after the insertion step.

7. A process according to claim 6, wherein for each of the parts:
- the respective hollow body is filled to 20% to 70% with loose material prior to the insertion step, and one, more or all of the following steps are performed for each of said parts:
- producing a short-term increased pressure in the hollow body filled with loose material and inserted between the mould portions,
- post-filling loose material after the step of producing increased pressure, and/or
- inclining the hollow body which has preferably already been inserted between the mould portions into an angled position relative to the horizontal, preferably in a range of 5° to 60°.

8. A process according to one of the preceding claims wherein a preferably cohesion-less loose material is used as the loose material, consisting of spherical or polyhedral particles,
wherein preferably the mean diameter of the particles is 20 mm or fewer mm.

9. A process according to one of claims 6 to 8 wherein one or more legs extending between two mould portions and supporting the mould portions relative to each other are provided as a mould portion.

10. A process for the one-piece production of a wind power installation rotor blade comprising the steps:
- producing a mould core by a process according to one of the preceding claims,
- providing at least a first mould portion and a second mould portion which together form a negative shape of the rotor blade,
- covering the mould core or the mould portions with one or more fibre material layers,
- assembling the mould portions and the mould core,
- pressure-tightly closing the assembly consisting of the mould core and mould portions,
- producing a reduced pressure between the mould portions and the mould core, and
- feeding injection material between the mould portions and the mould core under a reduced pressure, and
- hardening the injection material after it has impregnated the fibre material.

11. A process according to claim 10 comprising the step:
covering the mould core or the mould portions with one, more or all of the following:
- a transfer film, preferably as the outermost layer,
- a vacuum film, preferably as the innermost layer,
- one or more first fluid lines for subjecting the volume between the mould core or cores and the mould portions to reduced pressure,
- one or more second fluid lines for feeding injection material into the volume between the mould core or cores and the mould portions with reduced pressure,
- one or more spar caps, and
- one or more further mould portions, for example pre-mould portions, which for example are in the form of a leg or a pressure balancing chamber, wherein the mould portion or portions and the spar caps are respectively impregnated with injection material or are impregnated during the step of feeding injection material between the mould portions and the mould core or cores under a reduced pressure.

12. A process according to one of claims 10 or 11, wherein
- at least the first mould portion is covered,
- the mould core or cores are fitted into the first mould portion,
- preferably the mould core or cores and the first mould portion are fixed relative to each other, for example by means of a vacuum film, and
- the mould core or cores and the first mould portion are assembled in the fixed condition to the second mould portion when the second mould portion has been covered and/or when the covering of the second mould portion has been applied to the arrangement of the first mould portion and the mould core or cores.

13. A process according to one of claims 10 to 12, wherein a part of the loose material is removed from the mould core after the feed of injection material.

14. A process according to one of claims 10 to 13, wherein connections for one or more fluid lines and for the feed of injection material are so placed that a reduced pressure produced by means of the fluid lines in the space between mould portions and mould core has the result that the injection material firstly impregnates the leg or legs supporting the mould portions relative to each other.

15. A process according to one of claims 10 to 14, wherein producing the reduced pressure between mould portions and mould core comprises the steps:
- setting a pressure reference value, preferably by means of an operating unit of an electronic control unit which is preferably a programmable logic controller (PLC),
- setting a reference time for which the pressure reference value is to be maintained,
- communicating the pressure reference value and the reference time to the electronic control unit,
- detecting a pressure value in a fluid line in fluid communication with the space between mould portions and mould core, preferably by means of at least one pressure sensor,
- communicating the pressure value to the electronic control unit,
- ascertaining a difference between the pressure reference value and the pressure value by means of the electronic control unit,
- venting the fluid line until the difference is equal to zero whereby a reduced pressure is applied,
- maintaining the reduced pressure during the duration of the set reference time or until an automatic or manually implemented termination, and
- ventilating the fluid line until ambient pressure prevails there,
wherein during the course of the reference time after the pressure reference value is reached the applied reduced pressure is post-regulated by means of the following steps:
- ventilating the space between mould core and mould portion if the difference ascertained by the electronic control unit is greater than zero, and
- venting the space between mould core and mould portion if the difference ascertained by the electronic control unit is less than zero.

16. A process according to claim 15, wherein for post-regulation of the applied reduced pressure in the fluid line air is conveyed through a first valve, preferably a regulating valve, which can be opened and closed by means of the electronic control device in dependence on the difference, and/or
wherein for accelerated venting and/or for accelerated ventilation of the fluid line air is conveyed through a bypass, wherein the bypass can be opened and closed by means of a second valve actuated by the electronic control device.

17. A process according to one of claims 15 or 16 comprising the step:
- protocolling of the pressure values ascertained preferably by the at least one pressure sensor during the duration of the set reference time.

18. A process according to claim 17 comprising one, more or all of the steps:
- terminating the reduced pressure implementation and ventilation of the fluid line to ambient pressure as soon as the protocolled pressure values differ from the pressure reference value by more than a preset tolerance value,
- terminating the reduced pressure implementation and ventilation of the fluid line to ambient pressure as soon as the protocolled pressure values increase at a rise rate higher than a preset maximum rise rate, and/or
- producing a pressure variation diagram for the duration of the set reference time or the duration of reduced pressure implementation until termination thereof.

## Revendications

1. Procédé de fabrication d'un noyau de formage pour la fabrication d'un seul tenant de pales de rotor d'éolienne, comprenant les étapes de :
- mise à disposition d'un corps creux souple, par exemple d'une gaine en film,
- insertion du corps creux entre au moins deux parties de moule, qui sont agencées l'une par rapport à l'autre de sorte qu'elles forment un moule négatif de la pale de rotor à fabriquer,
- remplissage du corps creux avec du produit en vrac, avant et après l'insertion du corps creux entre les parties de moule, et
- génération d'une dépression dans le corps creux, après que celui-ci a été rempli et inséré de sorte que le corps creux se rigidifie,
dans lequel le corps creux est rempli en partie de produit en vrac avant l'étape de l'insertion et est entièrement rempli de produit en vrac après l'étape de l'insertion.

2. Procédé selon la revendication 1,
dans lequel le corps creux est rempli de 20 % à 70 % de produit en vrac avant l'étape de l'insertion.

3. Procédé selon la revendication 1 ou 2,
comprenant l'étape de :
- génération d'une brève surpression dans le corps creux rempli de produit en vrac, inséré entre les parties de moule.

4. Procédé selon la revendication 3,
comprenant l'étape de :
- recharge de produit en vrac après l'étape de la génération de surpression.

5. Procédé selon l'une quelconque des revendications précédentes,
comprenant l'étape de :
- inclinaison du corps creux, de préférence déjà inséré entre les parties de moule, dans une position inclinée par rapport à l'horizontale, de préférence dans une plage de 5° à 60°.

6. Procédé selon l'une quelconque des revendications précédentes,
dans lequel le noyau de formage est un noyau de formage en plusieurs parties, dans lequel chacune de ces parties est fabriquée avec les étapes de :
- insertion du corps creux entre des parties de moule, qui sont agencées l'une par rapport à l'autre de sorte qu'elles forment un moule négatif,
- remplissage du corps creux avec du produit en vrac, avant ou après l'insertion du corps creux entre les parties de moule, et
- génération d'une dépression dans le corps creux, après que celui-ci a été rempli et inséré, dans lequel le corps creux se rigidifie dans un moule positif correspondant au moule négatif, dans lequel pour chacune des parties, le corps creux respectif est rempli de produit en vrac avant l'étape de l'insertion et est entièrement rempli de produit en vrac après l'étape de l'insertion.

7. Procédé selon la revendication 6,
dans lequel pour chacune des parties
- le corps creux respectif est rempli de 20 % à 70 % de produit en vrac avant l'étape de l'insertion, et pour chacune des parties, une, plusieurs ou toutes les étapes sont réalisées :
- génération d'une brève surpression dans le corps creux rempli de produit en vrac, inséré entre les parties de moule,
- recharge de produit en vrac après l'étape de la génération de surpression, et/ou
- inclinaison du corps creux, de préférence déjà inséré entre les parties de moule, dans une position inclinée par rapport à l'horizontale, de préférence dans une plage de 5° à 60°.

8. Procédé selon l'une quelconque des revendications précédentes,
dans lequel un produit en vrac, de préférence sans cohésion, qui se compose de particules sphériques ou polyédriques, est utilisé en tant que produit en vrac, dans lequel de préférence le diamètre moyen des particules est de 20 mm ou moins.

9. Procédé selon l'une quelconque des revendications 6 à 8,
dans lequel une ou plusieurs traverses s'étendant entre deux parties de moule et soutenant les parties de moule l'une contre l'autre sont prévues en tant que partie de moule.

10. Procédé de fabrication d'un seul tenant d'une pale de rotor d'éolienne, comprenant les étapes de :
- fabrication d'un noyau de formage selon un procédé selon l'une quelconque des revendications précédentes,
- mise à disposition d'au moins une première partie de moule et d'une seconde partie de moule, lesquelles forment ensemble un moule négatif de la pale de rotor,
- garniture du noyau de formage ou des parties de moule avec une ou plusieurs couches de matériau fibreux,
- assemblage des parties de moule et du noyau de formage,
- fermeture étanche à la pression du composite de noyau de formage et de parties de moule,
- génération d'une dépression entre les parties de moule et le noyau de formage, et
- amenée de matériau d'injection entre les parties de moule et le noyau de formage sous dépression, et
- durcissement du matériau d'injection, après que celui-ci a imprégné le matériau fibreux.

11. Procédé selon la revendication 10,
comprenant l'étape de :
garniture du noyau de formage ou des parties de moule avec un, plusieurs ou tous les éléments suivants :
- un film de transfert, de préférence en tant que couche extérieure,
- un film de mise sous vide, de préférence en tant que couche intérieure,
- une ou plusieurs premières conduites de fluide pour la sollicitation du volume entre le ou les noyaux de formage et les parties de moule avec dépression,
- une ou plusieurs secondes conduites de fluide pour l'amenée de matériau d'injection dans le volume entre le ou les noyaux de formage et les parties de moule avec dépression,
- un ou plusieurs raidisseurs de poutre,
- une ou plusieurs autres parties de moule réalisées par exemple en tant que traverse ou chambre de force, par exemple des parties préformées, dans lequel la ou les parties de moule et raidisseurs de poutre sont respectivement imprégnés de matériau d'injection ou sont imprégnés pendant l'étape de l'amenée de matériau d'injection entre les parties de moule et le ou les noyaux de formage sous dépression.

12. Procédé selon l'une quelconque des revendications 10 ou 11, dans lequel
- au moins la première partie de moule est garnie,
- le ou les noyaux de formage sont insérés dans la première partie de moule,
- de préférence le ou les noyaux de formage et la première partie de moule sont fixés l'un à l'autre, par exemple au moyen d'un film de mise sous vide, et
- le ou les noyaux de formage et la première partie de moule sont assemblés à l'état fixé avec la seconde partie de moule lorsque la seconde partie de moule a été garnie et/ou lorsque la garniture de la seconde partie de moule a été posée sur l'agencement de la première partie de moule et du ou des noyaux de moulage.

13. Procédé selon l'une quelconque des revendications 10 à 12, dans lequel
après l'amenée de matériau d'injection, une partie du produit en vrac est retirée du noyau de formage.

14. Procédé selon l'une quelconque des revendications 10 à 13, dans lequel
des raccords pour une ou plusieurs conduites de fluide ainsi que pour l'amenée de matériau d'injection sont posés de sorte qu'une dépression générée au moyen des conduites de fluide dans l'espace entre les parties de moule et le noyau de formage conduit à ce que le matériau d'injection imprègne d'abord la ou les traverse(s) soutenant les parties de moule l'une contre l'autre.

15. Procédé selon l'une quelconque des revendications 10 à 14, dans lequel la génération de la dépression entre les parties de moule et le noyau de formage comprend les étapes de :
- réglage d'une valeur de consigne de pression, de préférence au moyen d'une unité de fonctionnement d'une unité de commande électronique, laquelle est de préférence un automate programmable (SPS),
- réglage d'un temps de consigne, pour lequel la valeur de consigne de pression doit être maintenue,
- transmission de la valeur de consigne de pression et du temps de consigne à l'unité de commande électronique,
- détection d'une valeur de pression dans une conduite de fluide, qui est en communication fluidique avec l'espace entre les parties de moule et le noyau de formage, de préférence au moyen d'au moins un capteur de pression,
- transmission de la valeur de pression à l'unité de commande électronique,
- détermination d'une différence entre la valeur de consigne de pression et la valeur de pression au moyen de l'unité de commande électronique,
- évacuation de la conduite de fluide, jusqu'à ce que la différence soit égale à zéro, moyennant quoi une dépression est appliquée,
- maintien de la dépression pendant la durée du temps de consigne réglé, ou jusqu'à une interruption provoquée manuellement ou automatique, et
- aération de la conduite de fluide, jusqu'à ce qu'il y règne une pression ambiante, dans lequel pendant l'écoulement du temps de consigne après l'atteinte de la valeur de consigne de pression, la dépression appliquée est réajustée au moyen des étapes suivantes :
- aération de l'espace entre le noyau de formage et la partie de moule, lorsque la différence déterminée par l'unité de commande électronique est supérieure à zéro, et
- évacuation de l'espace entre le noyau de formage et la partie de moule, lorsque la différence déterminée par l'unité de commande électronique est inférieure à zéro.

16. Procédé selon la revendication 15,
dans lequel pour le réajustage de la dépression appliquée dans la conduite de fluide, de l'air est refoulé par une première soupape, de préférence une soupape de régulation, laquelle peut être libérée et bloquée au moyen du dispositif de commande électronique en fonction de la différence, et/ou
dans lequel pour l'évacuation accélérée et/ou pour l'aération accélérée de la conduite de fluide, de l'air est refoulé par une dérivation, dans lequel la dérivation peut être libérée et bloquée au moyen d'une seconde soupape commandée par le dispositif de commande électronique.

17. Procédé selon la revendication 15 ou 16,
comprenant l'étape de :
- journalisation des valeurs de pression déterminées, de préférence par l'au moins un capteur de pression, pendant la durée du temps de consigne réglé.

18. Procédé selon la revendication 17,
comprenant une, plusieurs ou toutes les étapes de :
- interruption de la sollicitation en dépression et aération de la conduite de fluide sur la pression ambiante, dès que les valeurs de pression journalisées divergent de plus d'une valeur de tolérance préréglée de la valeur de consigne de pression,
- interruption de la sollicitation en dépression et aération de la conduite de fluide sur la pression ambiante, dès que les valeurs de pression journalisées augmentent avec un taux d'accroissement supérieur à un taux d'accroissement maximum préréglé, et/ou
- création d'un diagramme de l'évolution de la pression pour la durée du temps de consigne réglé ou la durée de la sollicitation en dépression jusqu'à son interruption.
